# EUROPÄISCHE PATENTSCHRIFT

(11) **EP 2 951 509 B1**
(45) Veröffentlichungstag und Bekanntmachung des Hinweises auf die Patenterteilung: **08.11.2017**
(21) Anmeldenummer: 14702509.2
(22) Anmeldetag: 28.01.2014
(51) Int. Cl.: F24J 2/05, F24J 2/14, F24J 2/52, F24J 2/07, F24J 2/12, F24J 2/46, F24J 2/51

(54) **HALTEVORRICHTUNG UND ANORDNUNG FÜR ABSORBERROHRE**
RETAINING DEVICE FOR AND ARRANGEMENT OF ABSORBER TUBES
DISPOSITIF DE MAINTIEN POUR ET AGENCEMENT DE TUBES D'ABSORBEUR

(30) Priorität: 29.01.2013 DE 102013201409
(43) Veröffentlichungstag der Anmeldung: 09.12.2015
(73) Patentinhaber: Rioglass Solar Holding, S.A., 33695 Pola de Lena, Asturias (ES)
(72) Erfinder: KUCKELKORN, Thomas, 07743 Jena (DE)
(74) Vertreter: Mehler Achler
(86) Internationale Anmeldenummer: PCT/EP2014/051587
(87) Internationale Veröffentlichungsnummer: WO 2014/118153

(56) Entgegenhaltungen:
- WO-A1-03/019069
- WO-A2-2009/146215
- DE-T2- 60 223 711
- US-A- 3 113 790
- US-A- 5 312 137

## Beschreibung

Die Erfindung betrifft eine Haltevorrichtung für Absorberrohre gemäß dem Oberbegriff des Anspruchs 1. Die Erfindung bezieht sich auch auf eine Anordnung aus Absorberrohren und einer Haltevorrichtung.

Parabolrinnenkollektoren in solarthermischen Kraftwerken weisen parabolförmig gekrümmte Spiegel auf, die sich über eine Länge von mehreren hundert Metern erstrecken können. In der Brennlinie dieser Parabolspiegel sind Absorberrohre angeordnet, die ein Metallrohr und ein Hüllrohr aufweisen. Solche Absorberrohre sind beispielsweise aus der DE 102 31 467 B4 bekannt.

Um die erforderliche Länge zu erreichen, muss eine Vielzahl von Absorberrohren miteinander verbunden werden. Hierzu werden die Metallrohre miteinander verschweißt. In jedem Verbindungsbereich ist eine Haltevorrichtung angeordnet, die einerseits am Tragwerk des Parabolrinnenkollektors befestigt ist und andererseits an den Absorberrohren angreift.

Aus der WO 2010/142666 A2 ist eine solche Haltevorrichtung bekannt, die von der Innenseite des Paraboispiegels aufragende Pfosten oder Stützen aufweist, an deren oberen Ende eine Rohrschelle angeordnet ist, die die Metallrohre in ihrem Verbindungsbereich umgreift. Diese Rohrschelle weist ein Basiselement aus zwei aufragenden beabstandet zueinander angeordneten Blechen auf, an denen zwei Rohrschellenhälften mittels eines hakenartigen Scharniers beweglich und unverlierbar angeordnet sind. An den freien Enden der Rohrschellenhälften befindet sich eine Schraubverbindung. An der Innenseite der Rohrschellenhälfte sind Vorsprünge angeordnet, die an dem Metallrohr anliegen. Diese punktuellen Auflagen haben zwar den Vorteil, dass die Wärmeverluste durch Wärmeleitung verringert werden können. Trotz dieser Maßnahme sind aber die Wärmeverluste in dem Verbindungsbereich der Metallrohre noch zu groß.

Bisher werden z.B. Wärmeschutzmaterialien in Form von Dämmmaterial zur Reduzierung der Wärmeverluste an den offenen Bereichen des Absorberrohres verwendet. Das Anbringen eines bandartigen Dämmmaterials vor der Montage der Halteklammern hat jedoch den Nachteil, dass der Kraftschluss zwischen Halteklammer und Absorberrohr nicht gewährleistet ist und dass die Gefahr besteht, dass durch die Nachführbewegung des Kollektors sowie die durch thermische Ausdehnung des Absorberrohres verursachte Längsbewegung das Dämmmaterial aus seiner ursprünglichen Position herausgedrückt wird und der Kraftschluss der Halteklammern nicht mehr gegeben ist. Außerdem können bei einer dauerhaften Durchfeuchtung des Dämmmaterials, z.B. in langen Schlechtwetterperioden, Korrosionsprobleme an den unter dem Dämmmaterial liegenden Schweißnähten der Metallrohre auftreten.

Solche Dämmmaterialien weisen in der Regel, insbesondere im für die Anwendung im infraroten Spektralbereich bei Wellenlängen größer als 3 µm einen Reflexionsgrad von deutlich weniger als 0,5 auf. Unter dem Reffexionsgrad wird das Verhältnis von reflektierter und einfallender Intensität verstanden.

Aus der EP 1 690 047 B1 ist ein Solarkollektor bekannt, bei dem im Verbindungsbereich zweier Absorberrohre ein Strahlungsschutzelement der Länge L angeordnet ist, an dessen Ende ein Spiegelkragen vorgesehen ist. Das Strahlungsschutzelement hat einen größeren Krümmungsradius als der des Glashüllrohres und überdeckt den gesamten Freiraum zwischen den beiden Hüllrohren der Absorberrohre. Diese Anordnung hat auf Grund des großen Abstands des Strahlungsschutzelementes von den Metallrohren den Nachteil, dass sehr viel Wärmestrahlung von den Metallrohren auf stirnseitige Komponenten der Absorberrohre, wie z.B. auch die Glas-Metall-Übergangselemente, auftrifft und diese aufheizt.

Weitere Haltevorrichtungen für Absorberrohre sind aus WO 2009/146215 A2 oder DE 10 2007 000 487 A1 bekannt.

Es ist daher Aufgabe der Erfindung, die Nachteile des Standes der Technik zu vermeiden und die Wärmestrahlungsverluste an den Enden der Metallrohre von Absorberrohren weiter zu reduzieren.

Diese Aufgabe wird mit einer Haltevorrichtung gemäß den Merkmalen des Anspruchs 1 gelöst.

Es ist vorgesehen, dass an der Innenseite des Grundkörpers der Rohrschelle ein Wärmestrahlungsschild angeordnet ist, das im gesamten Wellenlängenbereich von 0,5 µm bis 30 µm einen Reflexionsgrad von 0,5 bis 1,0 aufweist.

Die Wärmestrahlung oder thermische Strahlung ist die elektromagnetische Strahlung, die das Metallrohr aufgrund seiner Temperatur aussendet. Der Wärmestrahlungsschild verhindert die Abstrahlung der von dem Metallrohr ausgesandten Wärmestrahlung in die Umgebung des Absorberrohres, indem das Wärmestrahlungselement die Wärmestrahlung auf das Metallrohr zurückreflektiert.

Der Reflexionsgrad des Wärmestrahlungsschildes liegt vorzugsweise im Bereich von 0,7 bis 1,00, und besonders bevorzugt im Bereich von 0,8 bis 1,00 für einen Wellenlängenbereich von 0,5 µm bis 30 µm.

Die genannten Reflexionsgrade gelten vorzugsweise für den gesamten Wellenlängenbereich von 1,0 µm bis 30 µm, besonders bevorzugt für den gesamten Wellenlängenbereich von 2,0 µm bis 30 µm.

Die Anordnung des Wärmestrahlungsschildes an der Rohrschelle hat den Vorteil, dass der Wärmestrahlungsschild an der Rohrschelle vormontiert werden kann, was die Montage insgesamt vereinfacht.

Unter der Innenseite des Grundkörpers der Rohrschelle wird diejenige Seite verstanden, die dem Metallrohr des Absorberrohres zugewandt ist.

Mittels des Wärmestrahlungsschilds werden die Wärmeverluste an den Rohrenden des Metallrohrs deutlich verringert. Der Effekt verstärkt sich bei höheren Betriebstemperaturen, wie sie z.B. für den Betrieb mit Salzschmelzen als Wärmeträger angestrebt werden. Hierbei sind sowohl die Temperaturen im Standby-Betrieb mit 200°C bis 300° C als auch die maximalen Betriebstemperaturen mit bis zu 550° C deutlich höher als bei heutigen Anlagen, die mit Öl als Wärmeträger betrieben werden und Standby-Temperaturen von 80°C bis 120°C und max. Betriebstemperaturen von 350°C bis 400°C erreichen. Die Wärmeverluste konnten mit dem erfindungsgemäßen Wärmestrahlungsschild im Vergleich zu einer Haltevorrichtung, die kein Wärmestrahlungsschild aufweist, um bis zu 20% reduziert werden.

Der Wärmestrahlungsschild besteht vorzugsweise aus Edelstahl oder Aluminium oder einer Aluminium-Legierung.

Um den Reflexionsgrad zu erhöhen, insbesondere auf Werte größer als 0,8 zu erhöhen, ist eine reflektierende Beschichtung von Vorteil. Die Beschichtung besteht vorzugsweise aus Aluminium, Kupfer oder Silber oder aus einer Al-, Cu- oder Silberlegierung.

Die abgestrahlte Wärme wird von der Rohrschelle ferngehalten, sodass diese sich weniger stark aufheizt. Das Material der Rohrschelle kann somit weitgehend unabhängig von den thermischen Eigenschaften gewählt werden.

Durch die metallrohrnahe Anordnung des Wärmestrahlungsschildes wird weniger Wärme an die äußeren Bauteile des Absorberrohres abgeführt. Dadurch kann die Temperaturdifferenz und damit die thermisch induzierte Spannung im Übergangsbereich zwischen z.B. einer Dehnungsausgleichseinrichtung, die beispielsweise ein metallischer Faltenbalg sein kann, und dem Glashüllrohr reduziert werden, wodurch das Bruchrisiko des Glas-Metall-Übergangselements verringert wird. Die metallrohrnahe Anordnung des Wärmestrahlungsschifdes schließt einen Kontakt des Wärmestrahlungsschildes mit dem Metallrohr aus. Eine beabstandete Anordnung des Wärmestrahlungsschildes bezüglich des Metallrohres ist daher bevorzugt.

Vorzugsweise erstreckt sich der Wärmestrahlungsschild über mindestens 50% des Innenumfangs der Rohrschelle. Der Innenumfang bezieht sich auf die Innenseite des Grundkörpers. Eine Abdeckung von 50% des Innenumfangs kann ausreichen, wenn damit diejenige Fläche des Metallrohrs abgeschirmt wird, die der Parabolrinne zugewandt ist.

Die der Parabolrinne zugewandte Seite des Absorberrohres heizt sich stärker auf als die der Sonne zugewandte Seite und strahlt damit auch mehr Wärme ab. Eine wesentliche Verminderung der Wärmeverluste wird also bereits erreicht, wenn die der Parabolrinne zugewandte Seite durch den Wärmestrahlungsschild abgedeckt wird.

Vorzugsweise erstreckt sich der Wärmestrahlungsschild über den gesamten Innenumfang der Rohrschelle, weil damit die Wärmeverluste noch deutlicher minimiert werden können.

Vorzugsweise ist die Breite Bₛ des Wärmestrahlungsschilds größer als die Breite B_{R} der Rohrschelle. Durch die größere Breite des Wärmestrahlungsschildes wird die Rohrschelle besser vor der Wärmestrahlung geschützt. Außerdem werden mit zunehmender Breite die Wärmeverluste verringert.

Der Wärmestrahlungsschild überdeckt vorzugsweise den gesamten freien Bereich des Metallrohres, d.h. den durch das Glashüllrohr nicht vakuumgedämmten Bereich.

Der Wärmestrahlungsschild ist vorzugsweise einteilig oder mehrteilig ausgeführt. Der Wärmestrahlungsschild kann beispielsweise aus einem oder mehreren Metallstreifen bestehen. Die mehrteilige Ausgestaltung des Wärmestrahlungsschildes hat gegenüber der einteiligen Ausführungsform den Vorteil, dass sich der Wärmestrahlungsschild leichter montieren lässt.

Der Wärmestrahlungsschild kann mehrlagig ausgeführt werden oder aus einem mehrlagigen Material bestehen, um den Wärmeschutzeffekt zu erhöhen.

Hierzu eignet sich beispielsweise eine mehrlagige Anordnung von Folien, z.B. Al-Folien.

Der Wärmestrahlungsschild ist beabstandet zum Grundkörper der Rohrschellenhälften angeordnet. Diese beabstandete Anordnung hat den Vorteil, dass der Wärmestrahlungsschild bis auf den Kontakt mit den Haltemitteln keinen Kontakt mit der Rohrschelle aufweist, sodass weitgehend keine Wärmeleitung stattfinden kann und somit die Wärmeverluste minimiert werden können.

Vorzugsweise weist der Wärmestrahlungsschild Öffnungen auf, durch die die Haltemittel hindurchgreifen.

Die Haltemittel greifen vorzugsweise soweit durch die Öffnungen hindurch, dass der Wärmestrahlungsschild gegenüber den Kontaktflächen der Haltemittel, die im montierten Zustand an den Metallrohren anliegen, zurückversetzt angeordnet sind. Dadurch wird eine zu den Metallrohren beabstandete Anordnung des Wärmestrahlungsschildes bewirkt.

Die Haltemittel dienen vorzugsweise auch zur Fixierung des Wärmestrahlungsschildes. Vorzugsweise sind die Abmessungen der Öffnungen an die Abmessungen der Haltemittel angepasst, sodass eine Relativbewegung von Rohrschelle und Wärmestrahlungsschild verhindert wird.

Vorzugsweise besteht der Wärmestrahlungsschild aus mindestens einem gebogenen Metallstreifen. Metallstreifen lassen sich in großer Anzahl auf einfache Weise zuschneiden und umformen, sodass eine Vielzahl von Wärmestrahlungsschilden auf preiswerte Weise hergestellt werden kann.

Vorzugsweise besteht der Grundkörper der Rohrschelle aus Vollmaterial. Als Vollmaterial wird vorzugsweise Stahl, insbesondere rostfreier Stahl eingesetzt. Vollmaterial hat den Vorteil, dass daraus sehr stabile Grundkörper gefertigt werden können, welche sich konstruktiv leicht mit den Halteelementen verbinden lassen. Beispielsweise können seitlich an den Enden des Grundkörpers Sacklöcher angebracht sein, in die Bolzen zur Befestigung mit den Halteelementen eingeführt werden.

Vorzugsweise sind die Haltemittel der Rohrschelle Auflagebacken. Diese Auflagebacken können an dem Grundkörper der Rohrschelle angeformt sein. Diese Auflagebacken sind vorzugsweise mit einer ebenen Kontaktfläche versehen, sodass eine punkt- oder linienförmige Auflage an dem runden Metallrohr erzielt werden kann. Eine punkt- oder linienförmige Auflage hat den Vorteil, dass die Wärmeleitung vom Metallrohr in die Rohrschelle minimiert wird.

Gemäß einer weiteren Ausführungsform kann der Grundkörper der Rohrschelle in sogenannter Skelettbauweise gefertigt sein. Dies bedeutet, dass die Rohrschellenhälften eine Art Rahmenkonstruktion aufweisen, die über ein geringes Gewicht verfügt.

Vorzugsweise ist der Grundkörper einer Rohrschellenhälfte aus mindestens zwei in Achsrichtung der Rohrschelle nebeneinander angeordneten Metallzuschnitten gefertigt, die über Verbindungsmittel miteinander verbunden sind. Die Achse der Rohrschelle entspricht der Achse des Metallrohres. Diese Verbindungsmittel sind vorzugsweise an den Stellen angeordnet, wo die Rohrschellenhälften mittels Schrauben miteinander verbunden sind. Die Verbindungsmittel sind daher Metallkörper, vorzugsweise mit einer Bohrung zur Aufnahme der Verbindungsschraube.

Die Haltemittel der Metallstreifenzuschnitte werden vorzugsweise durch Auflagesegmente gebildet, die eine ebene Kontaktfläche aufweisen.

Die Aufgabe wird auch mit einer Anordnung aus zwei Absorberrohren und einer Haltevorrichtung mit den Merkmalen des Anspruchs 8 gelöst.

Die Anordnung weist zwei Absorberrohre auf, die jeweils ein Metallrohr und ein Glashüllrohr aufweisen, wobei die Metallrohre miteinander verbunden sind und zwischen den benachbarten Glashüllrohren ein Zwischenraum besteht. Die Anordnung umfasst außerdem eine Haltevorrichtung, die im Zwischenraum an den verbundenen Metallrohren angreift und eine Rohrschelle mit einem Grundkörper aufweist, wobei an der Innenseite des Grundkörpers der Rohrschelle ein Wärmestrahlungsschild angeordnet ist, das im gesamten Wellenlängenbereich von 0,5 µm bis 30 µm einen Reflexionsgrad von 0,5 bis 1,0 aufweist.

Der Zwischenraum zwischen den Glashüllrohren wird je nach Bauweise der Absorberrohre durch die Anordnung von Befestigungselementen für die Glashüllrohre an den Metallrohren definiert.

Vorzugsweise weist der Wärmestrahlungsschild einen Krümmungsradius R_{W} auf, der kleiner ist als der Krümmungsradius R_{G} des Glashüllrohres. Die Wärmestrahlung der Metallrohre wird durch den Wärmestrahlungsschild daran gehindert, auf stirnseitige Komponenten der Absorberrohre aufzutreffen und diese aufzuheizen.

Vorzugsweise ist der Krümmungsradius R_{W} größer als der Krümmungsradius R_{M} des Metallrohres. Der Krümmungsradius R_{W} liegt somit bevorzugt zwischen R_{M} und R_{G}. Vorzugsweise gilt 1,1 · R_{M} ≤ R_{W} ≤ 1,3 · R_{M}. Wenn der Wärmestrahlungsschild Krümmungsradien in diesem Bereich aufweist, ist es möglichst dicht am Metallrohr aber trotzdem noch beabstandet zum Metallrohr angeordnet.

In der Ausführungsform gemäß Anspruch 8 ist der Wärmestrahlungsschild beabstandet zu den Metallrohren angeordnet. Diese beabstandete Anordnung hat den Vorteil, dass keine Wärmeleitung vom Metallrohr zu dem Wärmestrahlungsschild stattfinden kann und dass weiterhin der Zwischenraum zwischen den Metallrohren und dem Wärmestrahlungsschild belüftet ist, so dass sich dort keine Feuchtigkeit ansammeln kann.

Vorzugsweise ist die Breite B_{S} des Wärmestrahlungsschildes so gewählt, dass der Zwischenraum zwischen den beiden Glashüllrohren bzw. der Befestigungselemente der Glashüllrohre überbrückt wird. Die freiliegenden Enden der Metallrohre werden abgedeckt.

Vorzugsweise ist der Wärmestrahlungsschild mindestens an der den Metallrohren zugewandten Seite reflektierend ausgebildet. Hierzu kann auch eine reflektierende Beschichtung vorgesehen sein.

Vorzugsweise weisen die Absorberrohre zwischen dem Metallrohr und dem Glashüllrohr eine Dehnungsausgleichseinrichtung, wie z.B. einen Faltenbalg, auf, die einerseits über ein Befestigungselement an dem Metallrohr und andererseits über ein weiteres Befestigungselement mit dem Glashüllrohr verbunden ist. Um den Übergang und die Befestigung mit dem Glashüllrohr zu gewährleisten, weist das Glashüllrohr ein sogenanntes Glasmetallübergangselement auf.

Je nach Anordnung der Dehnungsausgleichseinrichtung und der Anordnung der beteiligten Befestigungselemente kann der Zwischenraum zwischen benachbarten Absorberrohren unterschiedlich groß sein. Auch besteht die Möglichkeit, dass entsprechend der Anordnung der Dehnungsausgleichseinrichtung zwischen einem Befestigungselement und der Dehnungsausgleichseinrichtung ein Ringraum vorhanden ist, der von dem Zwischenraum aus zugänglich ist.

Wenn ein Ringraum zwischen dem Metallrohr und der Dehnungsausgleichseinrichtung oder der Dehnungsausgleichseinrichtung und einem Befestigungselement vorhanden ist, kann sich vorzugsweise der Wärmestrahlungsschild auch in diese Ringräume der beiden Absorberrohre hinein erstrecken. Damit wird eine noch bessere Abschirmung und Verminderung der Wärmestrahlungsverluste erzielt.

Die verschiedenen Ausführungsformen der Haltevorrichtung gelten auch für die erfindungsgemäße Anordnung.

Bevorzugte Ausführungsformen werden nachfolgend anhand der Zeichnungen näher erläutert.

Es zeigen:
- Fig. 1: eine perspektivische Darstellung einer Parabolrinne mit miteinander verbundenen Absorberrohren,
- Fig. 2: eine Explosionsdarstellung des Verbindungsbereichs von zwei Absorberrohren mit einer Haltevorrichtung,
- Fig. 3: eine Haltevorrichtung im montierten Zustand,
- Fig. 4: einen Schnitt gemäß der Ebene IV - IV durch die in Fig. 3 gezeigte Haltevorrichtung,
- Fig. 5a: einen Schnitt gemäß der Ebene V - V durch zwei miteinander verbundene Absorberrohre zur Veranschaulichung der axialen Erstreckung des Wärmestrahlungsschildes,
- Fig. 5b: ein Schnitt entsprechend der Fig. 5a durch eine weitere Ausführungsform der Haltevorrichtung,
- Fig. 6: eine Explosionsdarstellung der Haltevorrichtung gemäß einer weiteren Ausführungsform,
- Fig. 7 - 8: eine weitere Ausführungsform der Rohrschelle, und
- Fig. 9: eine weitere Ausführungsform des Wärmestrahlungsschildes

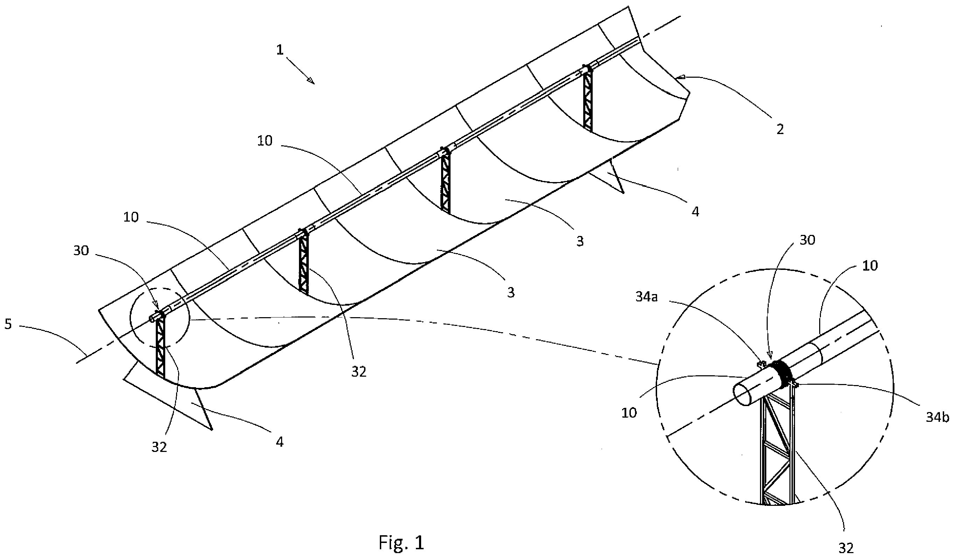

In der Fig. 1 ist ein Parabolrinnenkollektor 1 perspektivisch dargestellt, der Teil eines Parabolrinnenkraftwerks ist. Eine Parabolrinne 2 wird durch eine Vielzahl von Parabolspiegeln 3 gebildet, die miteinander verbunden sind. Die Parabolrinne 2 ist auf Stützen 4 schwenkbar gelagert, sodass eine Nachführung entsprechend dem Sonnenstand möglich ist.

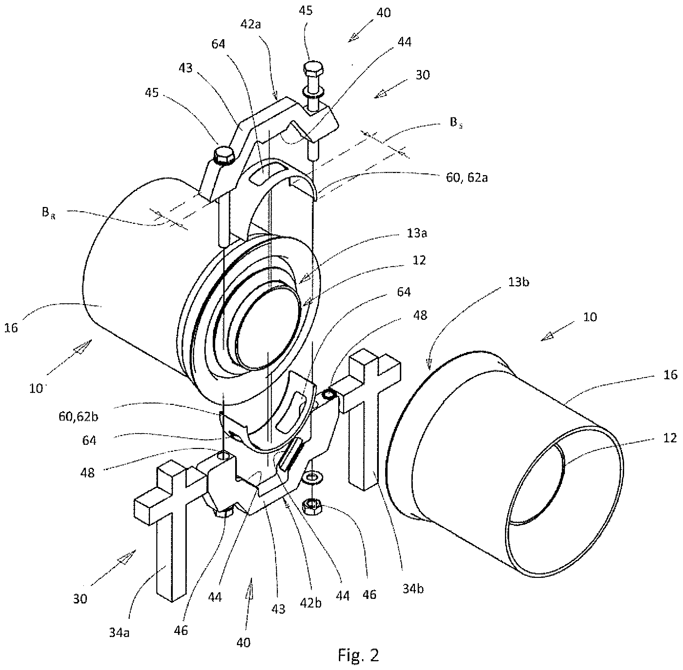

In der Brennlinie 5 der Parabolrinne 2 sind Absorberrohre 10 angeordnet, die ein Metallrohr 12 und ein Glashüllrohr 16 aufweisen. Die Metallrohre 12 sind an ihren Enden 13a, b jeweils miteinander verbunden, insbesondere miteinander verschweißt (s. Fig.2).

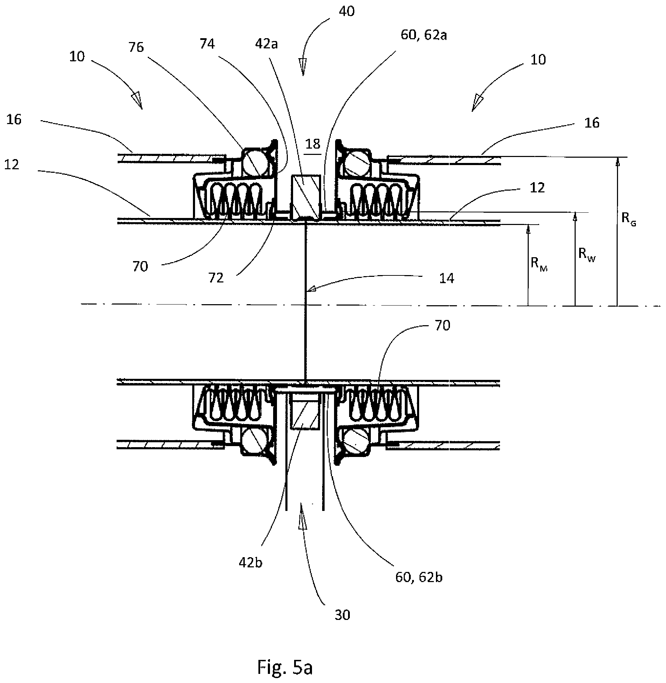

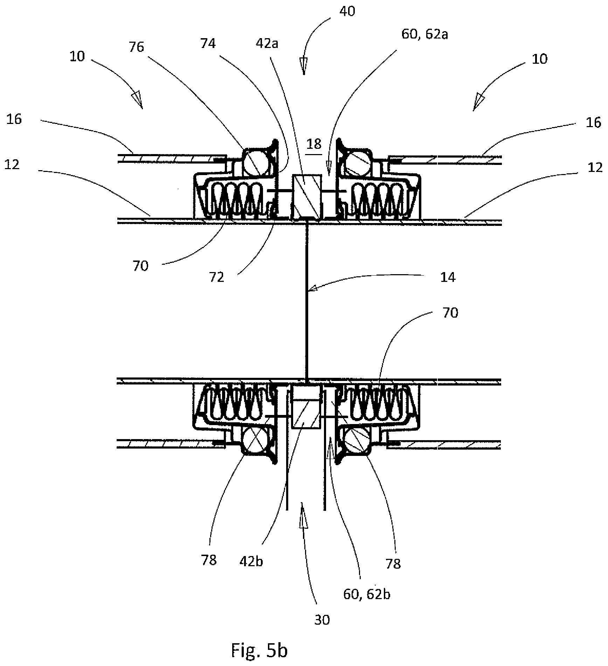

Das Glashüllrohr 16 eines Absorberrohres 10 ist gegenüber den beiden Enden 13a, b des Metallrohrs 12 zurückversetzt angeordnet, sodass benachbarte Absorberrohre 10 zwischen den Glashüllrohren 16 einen Zwischenraum 18 bilden (s. Fig. 5a, b), in dem eine Haltevorrichtung 30 an den verbundenen Enden 13a, b der Metallrohre 12 angreifen kann.

Jede Haltevorrichtung 30 ist an einem Stützelement 32 befestigt, das sich durch eine Öffnung (nicht dargestellt) in den Parabolspiegeln 3 erstreckt und an einer (nicht dargestellten Unterkonstruktion) unter den Parabolspiegeln 3 befestigt ist.

Die Stützelemente 32 weisen am oberen Ende zwei Halteelemente 34 a, b auf, an denen die Haltevorrichtung 30 befestigt ist.

In der Figur 2 ist die Haltevorrichtung 30 in einer Explosionsdarstellung gezeigt. Die Enden 13a und 13b der Metallrohre 12 der beiden Absorberrohre 10 sind der Übersichtlichkeit halber nicht miteinander verbunden und beabstandet zueinander dargestellt. Die Haltevorrichtung 30 weist in der Figur 2 eine Rohrschelle 40 auf, die aus 2 Rohrschellenhälften 42a, b besteht. Die Rohrschellenhälften 42a, b weisen jeweils einen Grundkörper 43 auf, der in der hier gezeigten Darstellung aus Vollmaterial gefertigt ist.

An den Enden der Rohrschellenhälften 42a, b sind Bohrungen 48 vorgesehen, durch die Schrauben 45 gesteckt werden, um die Rohrschellenhälften 42a, b miteinander zu verbinden. Auf die Schrauben 45 werden Muttern 46 aufgeschraubt.

Im zusammengebauten Zustand umgreift die Rohrschelle 40 die Enden 13a, b der beiden Metallrohre 12. Die untere Rohrschellenhälfte 42b ist an den beiden Halteelementen 34a, b eines Stützelementes 32 in nicht näher dargestellter Weise befestigt.

An der Innenseite der Rohrschelle 40, d.h. an der den Metallrohren 12 zugewandten Seite der Rohrschelle 40, sind am Grundkörper 43 Haltemittel 44 angeordnet, insbesondere angeformt, mit denen die Rohrschellenhälften 42a, b an den Metallrohren 12 anliegen.

Außerdem ist an der Innenseite der Rohrschelle 40 ein Wärmestrahlungsschild 60 angeordnet, das in der hier gezeigten Darstellung aus zwei Wärmestrahlungsschildhälften 62a, b besteht.

Diese Wärmestrahlungsschildhälften 62a, b bestehen jeweils aus einer Halbschale, die aus einem Metall- oder Blechstreifen gefertigt ist. Die obere Wärmestrahlungsschildhälfte 62a weist eine Öffnung 64 und die untere Wärmestrahlungsschildhälfte 62b weist zwei Öffnungen 64 auf, durch die die Haltemittel 44 hindurch greifen.

Die Abmessungen der Öffnungen 64 sind auf die Abmessungen der Haltemittel 44 abgestimmt, sodass die Hälften 62a, b an den Haltemitteln 44 fixiert werden.

Eine Verbindung der beiden Wärmestrahlungsschildhälften 62a, b ist daher nicht erforderlich, was die Montage vereinfacht.

Die Breite Bₛ der Wärmestrahlungsschildhälften 62a, b ist größer als die Breite B_{R} der Rohrschelle 40. Der Wärmestrahlungsschild 60 erstreckt sich über den gesamten Innenumfang der Rohrschelle 40.

In der Fig. 2 ist zu sehen, dass die Glashüllrohre 16 bezüglich der Enden 13a, b der Metallrohre 12 zurück versetzt angeordnet sind, sodass ein Zwischenraum 18 gebildet wird, der in den Fig. 5a, b näher zu sehen ist. Die Breite Bₛ ist so gewählt, dass der Zwischenraum 18 zwischen den Glashüllrohren 16 von dem Wärmestrahlungsschild 60 überbrückt und die freiliegenden Enden 13a, b der Metallrohre 12 abgedeckt werden.

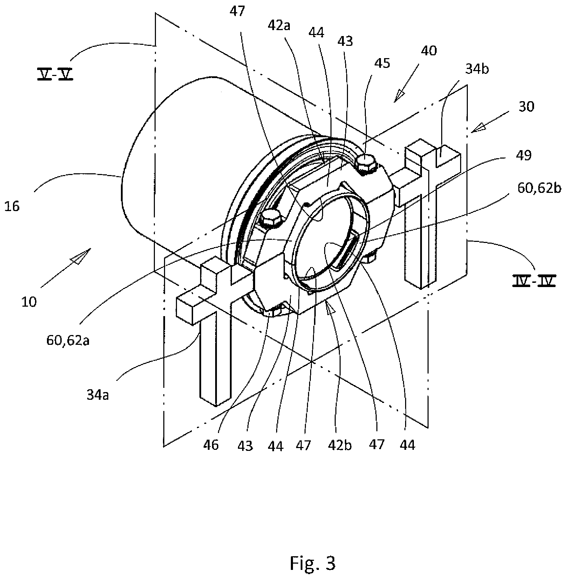

In der Fig. 3 ist die Haltevorrichtung 40 mit dem Wärmestrahlungsschild 60 im zusammengebauten Zustand dargestellt. Der Wärmestrahlungsschild 60 ist beabstandet zum Grundkörper 43 der Rohrschellenhälften 42a, b und beabstandet zum Metallrohr 12 angeordnet, sodass bis auf die Kontaktstellen an den ebenen Kontaktflächen 47 der Haltemittel 44 keine Wärmeleitung von den Metallrohren 12 stattfinden kann.

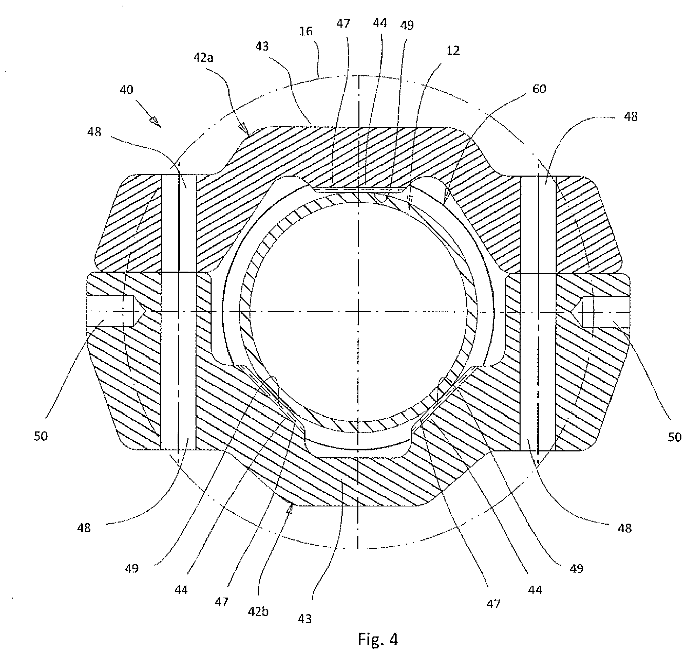

In der Fig. 4 ist ein Schnitt der in Figur 3 gezeigten Rohrschelle 40 gemäß der Ebene IV - IV dargestellt

Der Wärmestrahlungsschild 60 ist beabstandet zu den Grundkörpern 43 der Rohrschelle 40 angeordnet und wird von den Haltemitteln 44 fixiert. Das Haltemittel 44 ist als Backen mit einer ebenen Kontaktfläche 47 ausgeführt. Die Kontaktfläche 47 ist tangential zum Kreisumfang des Metallrohres ausgerichtet, sodass eine punkt- oder linienförmige Auflage 49 gebildet wird. Dadurch wird die Wärmeleitung zwischen Metallrohr 12 und Rohrschelle 40 minimiert.

Die untere Rohrschellenhälfte 42b besitzt Sacklöcher 50 für die Befestigung an den beiden Halteelementen 34a, b der Stützelemente 32.
In der Fig. 5a ist eine erste Ausführungsform der Haltevorrichtung 30 dargestellt. Die Fig. 5a zeigt einen Schnitt gemäß der Ebene V - V der in Fig. 3 dargestellten Rohrschelle 40.

An den Enden 13a, b der Metallrohre 12 sind Dehnungsausgleichseinrichtungen 70 in Form von Faltenbälgen angeordnet, die mittels einer Ringscheibe 72 an dem Metallrohr 12 und mittels eines rohrförmigen Befestigungselements 74 an einem Glasmetallübergangselement 76 befestigt ist, das wiederum an dem Glashüllrohr 16 angeordnet ist.

Der Zwischenraum 18 wird durch den Abstand zwischen den Ringscheiben 72 definiert.

Die Breite Bₛ des Wärmestrahlungsschildes 60 (siehe Figur 2) entspricht diesem Abstand, wobei der Wärmestrahlungsschild 60 die Ringscheiben 72 nicht kontaktiert.

Die Wärme, die von den Rohrenden 13a, b der Metallrohre 12 abgestrahlt wird, wird von dem Wärmestrahlungsschild 60 zurückreflektiert und geht somit nicht verloren.

Der Krümmungsradius R_{M} der Metallrohre 12, der Krümmungsradius R_{W} des Wärmestrahlungsschildes 60 und der Krümmungsradius R_{G} des Glashüllrohres 16 sind eingezeichnet.

In dieser Ausführungsform ist der Wärmestrahlungsschild 60 mit geringem Abstand zum Metallrohr 12 angeordnet, wobei R_{W} ∼ 1,15 · R_{M} beträgt.

In der Fig. 5b ist eine weitere Ausführungsform dargestellt, wobei der Abstand des Wärmestrahlungsschildes 60 von dem Metallrohr 12 deutlich größer ist. Zwischen der Dehnungsausgleichseinrichtung 70 und dem rohrförmigen Befestigungselement 74 ist ein Ringraum 78 ausgebildet, in den der Wärmestrahlungsschild 60 hineinragt. Diese Ausführungsform hat den Vorteil, dass die Rohrenden 13a, b noch besser abgeschirmt werden, weil es eine Überlappung von Wärmestrahlungsschild 60 und Ringscheibe 72 gibt. Die Ringscheiben 72 sind unter dem Wärmestrahlungsschild 60 angeordnet, wodurch die Wärmestrahlungsverluste noch weiter reduziert werden können.

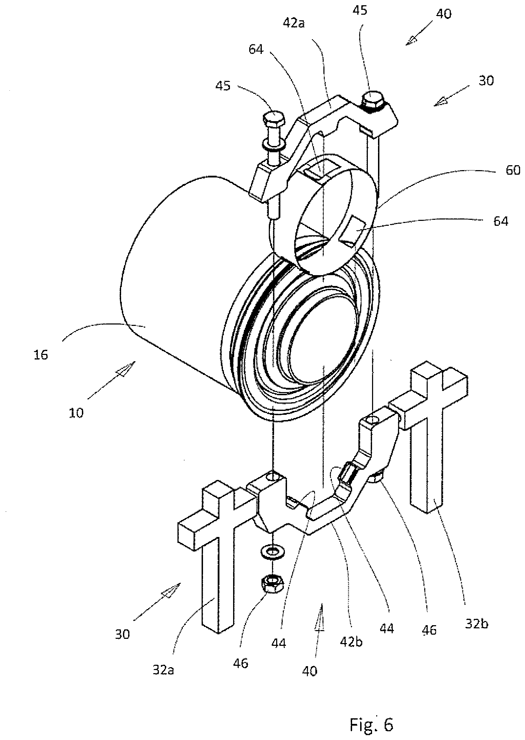

In der Figur 6 ist eine weitere Ausführungsform des Wärmestrahlungsschildes 60 dargestellt, die aus einem geschlossenen Ring besteht. Der Wärmestrahlungsschild 60 besitzt 3 Öffnungen 64 für den Durchgriff der Haltemittel 44. Die Haltevorrichtung 30 entspricht im Übrigen derjenigen aus der Fig. 3.

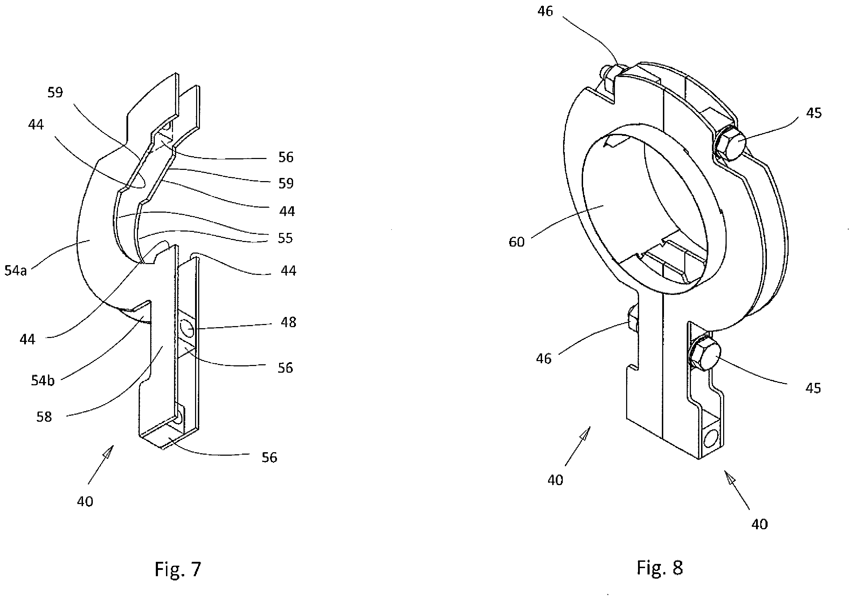

In den Fig. 7 - 9 ist eine weitere Ausführungsform der Rohrschelle 40 dargestellt, bei der jede Rohrschellenhälfte 42a, b zwei nebeneinander angeordnete Blechzuschnitte 54a, b aufweist, die über Verbindungsmittel 56 miteinander verbunden sind. Jeder Blechzuschnitt 54a, b weist einen gekrümmten Abschnitt und eine Verlängerung 58 auf. Die Verbindungsmittel 56 sind vorzugsweise dort vorgesehen, wo die Verbindungsschrauben 45 angebracht werden sollen. Die Verbindungsmittel 56 sind Metallkörper mit einer Bohrung 48.

Jeder Blechzuschnitt 54a, b besitzt am Innenrand 55 mindestens ein Haltemittel 44 in Form eines geraden Auflagesegmentes, das wie in der Ausführungsform der Fig. 3 eine punkt- oder linienförmige Auflage 59 an dem Metallrohr 12 gewährleistet.

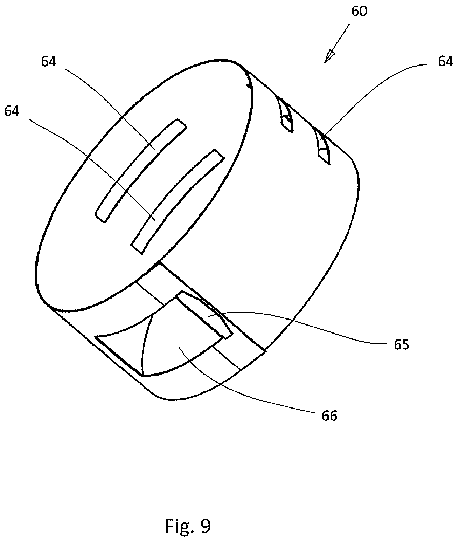

Die Fig. 8 zeigt den zusammengebauten Zustand der Rohrschelle 40, an dessen Innenseite der Wärmestrahlungsschild 60 angeordnet ist, das in Fig. 9 perspektivisch dargestellt ist. Der Wärmestrahlungsschild 60 ist als zylindrischer Ringstreifen ausgebildet, der an einem Ende eine Haltelasche 65 aufweist, die in eine Halteöffnung 66 eingreift.

Wie bereits in der Ausführungsform gemäß der Fig. 6 gezeigt wird, besitzt der Wärmestrahlungsschild 60 ebenfalls Öffnungen 64, in die die Haltemittel 44 eingreifen. Die Öffnungen 64 gemäß Figur 9 sind paarweise angeordnet und als Schlitze ausgeführt.

### Bezugszeichenliste

- 1: Parabolrinnenkollektor
- 2: Parabolrinne
- 3: Parabolspiegel
- 4: Stützen
- 5: Brennlinie

- 10: Absorberrohr
- 12: Metallrohr
- 13a,b: Ende des Metallrohres
- 16: Glashüllrohr
- 18: Zwischenraum

- 30: Haltevorrichtung
- 32: Stützelement
- 34a,b: Halteelement

- 40: Rohrschelle
- 42a,b: Rohrschellenhälften
- 43: Grundkörper
- 44: Haltemittel
- 45: Schraube
- 46: Mutter
- 47: Kontaktfläche
- 48: Bohrung
- 49: Auflage

- 50: Sackloch
- 54a,b: Metallzuschnitt
- 55: Innenrand
- 56: Verbindungsmittel
- 58: Verlängerung
- 59: Auflage

- 60: Wärmestrahlungsschild
- 62a,b: Wärmestrahlungsschildhälfte
- 64: Öffnung
- 65: Haltelasche
- 66: Halteöffnung

- 70: Dehnungsausgleichseinrichtung
- 72: Ringscheibe
- 74: rohrförmiges Befestigungselement
- 76: Glas - Metall - Übergangselement
- 78: Ringraum

- Bₛ: Breite Wärmestrahlungsschild
- B_{R}: Breite Rohrschelle
- R_{M}: Krümmungsradius des Metallrohres
- R_{W}: Krümmungsradius des Wärmestrahlungsschildes
- R_{G}: Krümmungsradius des Glashüllrohres

## Patentansprüche

1. Haltevorrichtung (30) für Absorberrohre (10), die ein Metallrohr (12) und ein Glashüllrohr (16) aufweisen,
mit einer Rohrschelle (40) aus zwei Rohrschellenhälften (42a, b), die einen Grundkörper (43) mit Haltemitteln (44) aufweisen, wobei die Rohrschelle (40) im montierten Zustand das Metallrohr (12) umgreift und die Haltemittel (44) an der Außenseite des Metallrohres (12) anliegen,
**dadurch gekennzeichnet, dass** an der Innenseite des Grundkörpers (43) der Rohrschelle (40) ein Wärmestrahlungsschild (60) angeordnet ist, weicher im gesamten Wellenlängenbereich von 0,5 µm bis 30 µm einen Reflexionsgrad von 0,5 bis 1,0 aufweist, wobei der Wärmestrahlungsschild (60) beabstandet zum Grundkörper (43) der Rohrschellenhälften (42a, b) angeordnet ist.

2. Haltevorrichtung nach Anspruch 1, **dadurch gekennzeichnet, dass** sich der Wärmestrahfungsschild (60) über mindestens 50% des Innenumfangs der Rohrschelle (40) erstreckt.

3. Haltevorrichtung (30) nach einem der Ansprüche 1 bis 2, **dadurch gekennzeichnet, dass** die Breite Bₛ des Wärmestrahlungsschildes (60) größer ist als die Breite B_{R} der Rohrschelle (40).

4. Haltevorrichtung nach einem der Ansprüche 1 bis 3, **dadurch gekennzeichnet, dass** der Wärmestrahlungsschild (60) den gesamten freien Bereich des Metallrohres (12) überdeckt.

5. Haltevorrichtung (30) nach einem der Ansprüche 1 bis 4, **dadurch gekennzeichnet, dass** der Wärmestrahlungsschild (60) Öffnungen (64) aufweist, durch die die Haltemittel (44) hindurchgreifen.

6. Haltevorrichtung (30) nach einem der Ansprüche 1 bis 5, **dadurch gekennzeichnet, dass** die Haltemittel (44) den Wärmestrahlungsschild (60) fixieren.

7. Haltevorrichtung (30) nach einem der Ansprüche 1 bis 6, **dadurch gekennzeichnet, dass** die Haltemittel (44) der Rohrschelle (40) Auflagebacken sind.

8. Anordnung aus zwei Absorberrohren (10), die jeweils ein Metallrohr (12) und ein Glashüllrohr (16) aufweisen, wobei die beiden Metallrohre (12) miteinander verbunden sind und zwischen den benachbarten Glas-Hüllrohren (16) ein Zwischenraum (18) besteht, und einer Haltevorrichtung (30) nach Anspruch 1, die im Zwischenraum (18) an den verbundenen Metallrohren (12) angreift, wobei der Wärmestrahlungsschild (60) sowohl beabstandet zum Grundkörper (43) der Rohrschellenhälften (42a, b) als auch beabstandet zu den Metallrohren (12) angeordnet ist.

9. Anordnung nach Anspruch 8, **dadurch gekennzeichnet, dass** der Wärmestrahlungsschild (60) einen Krümmungsradius R_{W} aufweist, der kleiner ist als ein Krümmungsradius R_{G} des Glashüllrohres (16).

10. Anordnung nach Anspruch 9, **dadurch gekennzeichnet, dass** der Krümmungsradius Rw größer ist als ein Krümmungsradius R_{M} des Metallrohres (12).

11. Anordnung nach Anspruch 9 oder 10, **dadurch gekennzeichnet, dass** 1,1 · R_{M} ≤ R_{W} ≤ 1,3 · R_{M} gilt.

12. Anordnung nach einem der Ansprüche 8 bis 11, **dadurch gekennzeichnet, dass** die Breite Bₛ des Wärmestrahlungsschildes (60) so gewählt ist, dass der Zwischenraum (18) zwischen den beiden Hüllrohren (16) überbrückt wird.

13. Anordnung nach einem der Ansprüche 8 bis 12, **dadurch gekennzeichnet, dass** der Wärmestrahlungsschild (60) sich mindestens über 50% des Umfangs der Metallrohre (12) erstreckt.

14. Anordnung nach einem der Ansprüche 8 bis 13, **dadurch gekennzeichnet, dass** der Wärmestrahlungschild (60) mindestens an der den Metallrohren (12) zugewandten Seite reflektierend ausgebildet ist.

15. Anordnung nach einem der Ansprüche 8 bis 14, **dadurch gekennzeichnet, dass** sich der Wärmestrahlungsschild (60) jeweils in einen Ringraum (78) zwischen Metallrohr (12) und einer Dehnungsausgleichseinrichtung (70) der Absorberrohre (10) erstreckt.

## Claims

1. Retaining device (30) for absorber tubes (10) which comprise a metal tube (12) and a glass cladding tube (16), comprising:
a tube clamp (40) consisting of two tube clamp halves (42a, b) which comprise a main part (43) that has retaining means (44), the tube clamp (40) surrounding the metal tube (12) in the mounted state and the retaining means (44) resting against the outside of the metal tube (12),
**characterised in that** a thermal radiation shield (60) is arranged on the inside of the main part (43) of the tube clamp (40) and has a reflectance of 0.5 to 1.0 over the entire wavelength range of from 0.5 µm to 30 µm, the thermal radiation shield (60) being arranged at a distance from the main part (43) of the tube clamp halves (42a, b).

2. Retaining device according to claim 1, **characterised in that** the thermal radiation shield (60) extends over at least 50% of the inner periphery of the tube clamp (40).

3. Retaining device (30) according to either claim 1 or claim 2, **characterised in that** the width Bₛ of the thermal radiation shield (60) is greater than the width B_{R} of the tube clamp (40).

4. Retaining device according to any one of claims 1 to 3, **characterised in that** the thermal radiation shield (60) covers the entire free region of the metal tube (12).

5. Retaining device (30) according to any one of claims 1 to 4, **characterised in that** the thermal radiation shield (60) has openings (64) through which the retaining means (44) pass.

6. Retaining device (30) according to any one of claims 1 to 5, **characterised in that** the retaining means (44) fix the thermal radiation shield (60) in place.

7. Retaining device (30) according to any one of claims 1 to 6, **characterised in that** the retaining means (44) of the tube clamp (40) are support jaws.

8. Arrangement of two absorber tubes (10), which each comprise a metal tube (12) and a glass cladding tube (16), wherein the two metal tubes (12) are interconnected and there is a gap (18) between the adjacent glass cladding tubes (16), and a retaining device (30) according to claim 1 which acts on the connected metal tubes (12) in the gap (18), wherein the thermal radiation shield (60) is arranged at a distance from the main part (43) of the tube clamp halves (42a, b) and at a distance from the metal tubes (12).

9. Arrangement according to claim 8, **characterised in that** the thermal radiation shield (60) has a radius of curvature R_{W} that is smaller than the radius of curvature R_{G} of the glass cladding tube (16).

10. Arrangement according to claim 9, **characterised in that** the radius of curvature R_{W} is greater than the radius of curvature R_{M} of the metal tube (12).

11. Arrangement according to either claim 9 or claim 10, **characterised in that** 1.1 · R_{M} ≤ R_{W} ≤ 1.3 · R_{M}.

12. Arrangement according to any one of claims 8 to 11, **characterised in that** the width Bₛ of the thermal radiation shield (60) is selected such that the gap (18) between the two cladding tubes (16) is bridged.

13. Arrangement according to any one of claims 8 to 12, **characterised in that** the thermal radiation shield (60) extends over at least 50% of the periphery of the metal tube (12).

14. Arrangement according to any one of claims 8 to 13, **characterised in that** the thermal radiation shield (60) is designed so as to be reflective at least on the side facing the metal tubes (12).

15. Arrangement according to any one of claims 8 to 14, **characterised in that** the thermal radiation shield (60) extends in each case into an annular space (78) between the metal tube (12) and an expansion compensation device (70) of the absorber tubes (10).

## Revendications

1. Dispositif de maintien (30) pour des tubes absorbants (10), qui présentent un tube métallique (12) et un tube de gainage en verre (16), avec un collier de serrage (40) composé de deux moitiés de collier de serrage (42a, b), qui présentent un corps de base (43) avec des moyens de maintien (44), dans lequel le collier de serrage (40), à l'état monté, enveloppe le tube métallique (12) et les moyens de maintien (44) sont adjacents au côté externe du tube métallique (12), **caractérisé en ce que** sur le côté interne du corps de base (43) du collier de serrage (40) est disposée une plaque de rayonnement thermique (60), laquelle présente dans toute la gamme de longueurs d'ondes de 0,5 µm à 30 µm un coefficient de réflexion de 0,5 à 1,0, dans lequel la plaque de rayonnement thermique (60) est disposée à une certaine distance du corps de base (43) des moitiés de collier de serrage (42a, b).

2. Dispositif de maintien selon la revendication 1, **caractérisé en ce que** la plaque de rayonnement thermique (60) s'étend sur au moins 50 % de la périphérie interne du collier de serrage (40).

3. Dispositif de maintien (30) selon l'une des revendications 1 à 2, **caractérisé en ce que** la largeur Bₛ de la plaque de rayonnement thermique (60) est supérieure à la largeur B_{R} du collier de serrage (40).

4. Dispositif de maintien selon l'une des revendications 1 à 3, **caractérisé en ce que** la plaque de rayonnement thermique (60) recouvre toute la zone libre du tube métallique (12).

5. Dispositif de maintien (30) selon l'une des revendications 1 à 4, **caractérisé en ce que** la plaque de rayonnement thermique (60) présente des ouvertures (64) à travers lesquelles passent les dispositifs de maintien (44).

6. Dispositif de maintien (30) selon l'une des revendications 1 à 5, **caractérisé en ce que** les dispositifs de maintien (44) fixent la plaque de rayonnement thermique (60).

7. Dispositif de maintien (30) selon l'une des revendications 1 à 6, **caractérisé en ce que** les dispositifs de maintien (44) du collier de serrage (40) sont des mâchoires de support.

8. Dispositif de deux tubes absorbants (10), qui présentent à chaque fois un tube métallique (12) et un tube de gainage en verre (16), dans lequel les deux tubes métalliques (12) sont reliés ensemble et entre les tubes de gainage en verre contigus (16) se trouve un espace intermédiaire (18), et d'un dispositif de maintien (30) selon la revendication 1, qui est en prise dans l'espace intermédiaire (18) sur les tubes métalliques reliés (12), dans lequel la plaque de rayonnement thermique (60) est disposée non seulement à une certaine distance du corps de base (43) des moitiés de collier de serrage (42a, b), mais aussi à une certaine distance des tubes métalliques (12).

9. Dispositif selon la revendication 8, **caractérisé en ce que** la plaque de rayonnement thermique (60) présente un rayon de courbure R_{W} qui est inférieur à un rayon de courbure R_{G} du tube de gainage en verre (16).

10. Dispositif selon la revendication 9, **caractérisé en ce que** le rayon de courbure R_{W} est supérieur à un rayon de courbure R_{M} du tube métallique (12).

11. Dispositif selon la revendication 9 ou 10, **caractérisé en ce que** 1,1. R_{M} ≤ R_{W} ≤ 1,3. R_{M} s'applique.

12. Dispositif selon l'une des revendications 8 à 11, **caractérisé en ce que** la largeur Bₛ de la plaque de rayonnement thermique (60) est choisie de manière telle que l'espace intermédiaire (18) entre les deux tubes de gainage (16) est enjambé.

13. Dispositif selon l'une des revendications 8 à 12, **caractérisé en ce que** la plaque de rayonnement thermique (60) s'étend au moins sur 50 % de la périphérie des tubes métalliques (12).

14. Dispositif selon l'une des revendications 8 à 13, **caractérisé en ce que** la plaque de rayonnement thermique (60) est conçue en se réfléchissant au moins sur le côté orienté vers les tubes métalliques (12).

15. Dispositif selon l'une des revendications 8 à 14, **caractérisé en ce que** la plaque de rayonnement thermique (60) s'étend à chaque fois dans un espace annulaire (78) entre le tube métallique (12) et un dispositif de compensation des dilatations (70) des tubes absorbeurs (10).
